# EUROPEAN PATENT SPECIFICATION

(11) **EP 3 258 561 B1**
(45) Date of publication and mention of the grant of the patent: **25.11.2020**
(21) Application number: 17175702.4
(22) Date of filing: 13.06.2017
(51) Int. Cl.: H02G 7/05

(54) **AN INSULATOR**
ISOLATOR
ISOLATEUR

(30) Priority: 16.06.2016 FI 20165500
(43) Date of publication of application: 20.12.2017
(73) Proprietor: Ensto Finland Oy, 06100 Porvoo (FI)
(72) Inventor: Julkunen, Seppo, 07880 Liljendal (FI); Salonen, Mikko, 06150 Porvoo (FI); Pulkkinen, Petteri, Jakari (FI); Gajewski, Krzysztof, 80-283 Gdansk (PL); Vikman, Timo, 05440 Hyvinkää (FI)
(74) Representative: Papula Oy

(56) References cited:
- EP-A1- 1 764 890
- WO-A1-2011/047414
- US-A- 3 358 953
- US-A- 4 579 306
- US-A- 5 064 971
- US-A- 5 837 943
- US-A1- 2008 202 794
- US-A1- 2008 203 243

## Description

### BACKGROUND OF THE INVENTION

The invention relates to an overhead power line assembly. The overhead power cables must be insulated from a structure that supports them. In one embodiment the supporting structure is a pin, whereas in one embodiment the supporting structure is a line post. The pin may be regarded as a general term used for physical overhead power line supports, such as poles, pylons or line posts.

As one example, constructing an overhead power line for medium voltage cables may include a step of hanging a slack cable onto the cable support. The cable should maintain its position on the cable support during the assembly, wherein the cable may be pulled through the cable support and tightened to a final position. The assembly process may require operating in tall structures, wherein transporting tools to the assembly location may be difficult. Therefore, it is beneficial for the assembly if a low number of tools or no tools at all are required.

For example, US 2008/202794 A1 discloses a cable support insulator having an insulator body having a cable base and a plurality of insulator sheds. The cable base has a ratchet locking mechanism to secure an electrical conductor to the insulator.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

An insulator for a medium voltage power line cable is disclosed. The insulator is used to separate the power line cable from a supporting structure. In one embodiment the insulator is attached in a vertical position to support an overhead power line cable. In one embodiment the insulator is suitable for a medium voltage cable ranging between 1 kV and 69 kV, without limiting the cable to this example range. The insulator comprises an insulator body and means for attaching the insulator body to a support structure. According to one example, a cable support forms a U-shaped structure that is open to receive the power line cable. The cable support may be closed with a latch having a tightening means. The tightening means may comprise a winged screw, enabling fully manual tightening. The latch assembly and the cable support design secure the cable in place during the assembly, also allowing the cable to be pulled before tightening to a final position.

Many of the attendant features will be more readily appreciated as they become better understood by reference to the following detailed description considered in connection with the accompanying drawings. The embodiments described below are not limited to implementations which solve any or all of the disadvantages of known insulators.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1a** illustrates one example of an insulator in a closed position without a cable from a first viewing angle;
**Fig. 1b** illustrates one example of the insulator in a closed position without the cable from a second viewing angle;
**Fig. 2a** is a sectional view of one embodiment of an insulator, wherein the tightening means are illustrated in an open position;
**Fig. 2b** is a sectional view of one embodiment of an insulator, wherein the tightening means are illustrated in a closed position;
**Fig. 2c** is a sectional view of one embodiment of an insulator, wherein the tightening means are illustrated in a closed position;
**Fig. 2d** is a sectional view of one embodiment of an insulator, wherein the tightening means are illustrated in a closed position;
**Fig. 3** is a sectional view of one embodiment schematically showing parts of the tightening means and the latch separated.

### DETAILED DESCRIPTION OF THE INVENTION

Reference will now be made in detail to the embodiments of the present invention, examples of which are illustrated in the accompanying drawings. The detailed description provided below in connection with the appended drawings is intended as a description of the present examples and is not intended to represent the only forms in which the present example may be constructed or utilized. However, the same or equivalent functions and sequences may be accomplished by different examples.

One example of the disclosed insulator relates to assembling overhead power lines carrying medium voltage. The basic structure of a medium voltage line comprises, at its core, a conductor and a surface layer. The suitable cable size may vary, for example between 10 mm² and 1000 mm², without limiting the size to these examples.

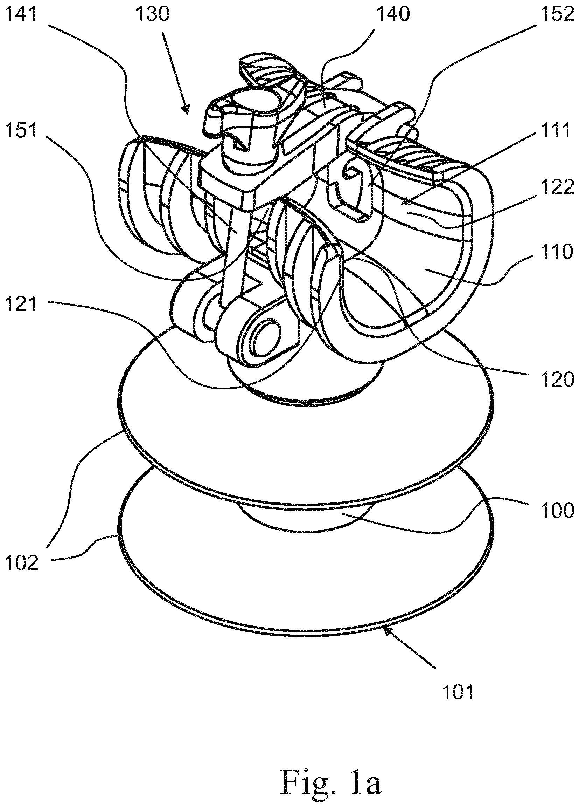

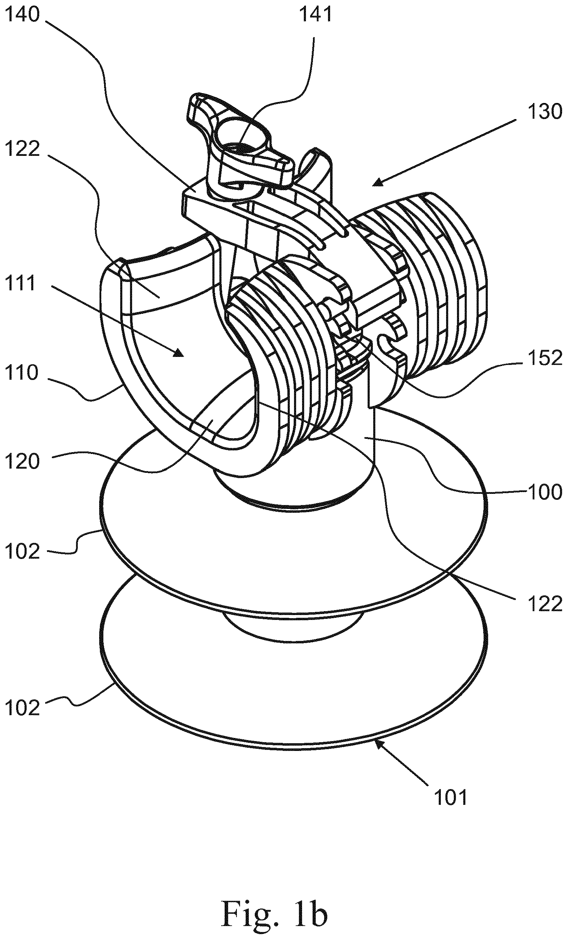

Figure 1a and Figure 1b disclose an ulator according to claim 1 in a closed position without a cable. The insulator comprises an insulator body 100. The insulator body comprises means for attaching 101 the insulator body to a support structure such as a pin or a line post. The attaching means may be any means known to a skilled man, such as bolts, screws or rivets. The insulator is in one example attached in a vertical position, wherein the attaching means are positioned in a lower portion of the insulator body 100. The insulator body may comprise at least one flange 102 configured to direct the electric field away from the support structure. The insulator body 100 may also comprise multiple flanges 102.

A cable support 110 is in one embodiment attached to the insulator body 100. In one embodiment the cable support 110 is formed as an integral piece with the insulator body 100. The insulator body and the cable support may be made of plastic, fiberglass or of a suitable combination of plastic and fiberglass. The cable support 110 is configured to carry the weight of the cable, in one embodiment the medium voltage cable having a covered conductor. The cable support 110 comprises a recess 111 having a bottom 120, a first side wall 121 extending from a first side of the bottom 120 and a second side wall 122 extending from a second side of the bottom 120. In one embodiment the bottom 120 and the first side wall 121 comprise a convex shape, enabling the cable to bend in the insulator without exposing the cable cover to any sharp edges. In one embodiment the second side wall 122 also comprises a convex shape, wherein the hollow space inside the cable support 110 expands outwards. In one embodiment the convex shape allows the cable to bend for at least 40 degrees in the insulator.

The recess 111 comprises an opening 130 between the first side wall 121 and the second side wall 122. The opening 130 is configured to receive a power line cable sideways, and the space allows the power line to be inserted through the opening 130. In the operational position the insulator is attached to the support structure in a vertical position and the opening 130 extends upwards. The power line cable may be lifted to the support 110 through the opening 130. The first side wall 121 and the second side wall 122 prevent the power line cable from rolling away or falling from the cable support 110.

A cable clamp 140 is configured to retain the power line cable in the recess 111. The cable clamp 140 closes the opening by tightening between the first side wall 121 and the second side wall 122. The cable clamp 140 comprises a tightening means 141 for tightening the cable clamp 140 to the power line cable, wherein the power line cable retains its final position.

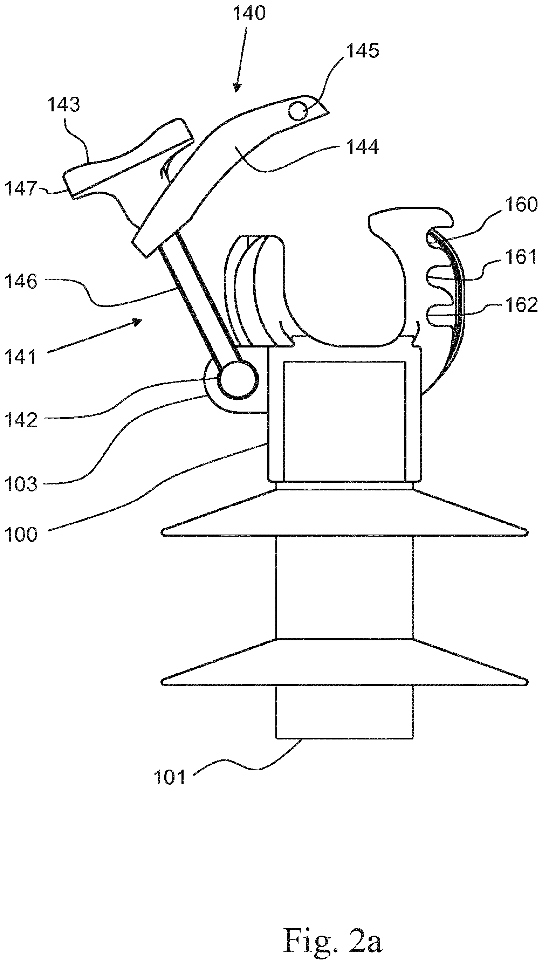

Figure 2a is a sectional view of one embodiment of an insulator, wherein the tightening means 141 are illustrated in an open position. The tightening means 141 are pivotally connected to the insulator body 100. In one embodiment a hinge 142 connects a rod 146 to a threaded end 147, wherein a nut 143 is configured to tighten the assembly. In one embodiment the nut 143 is a winged nut configured for manual operation, thereby allowing the tightening means 141 to be tightened manually. In one embodiment the hinge 142 comprises a thread and the rod 146 has a threaded end at the hinge, wherein the tightening means 141 comprise a bolt and the bolt head 143 comprises a winged head. The parts of the tightening means 141 may be made of metal. The hinge 142 may be arranged to pivotally rotate in a knuckle 103 formed in the insulator body 100, wherein the knuckle 103 is in one embodiment made of the same material as the cable support 110.

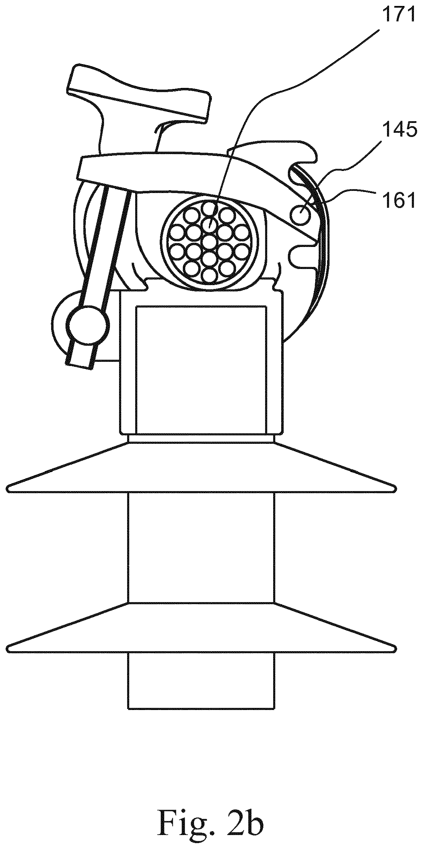

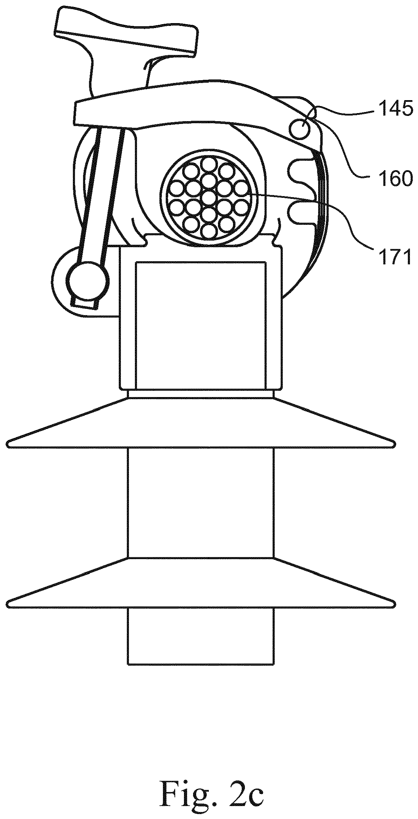

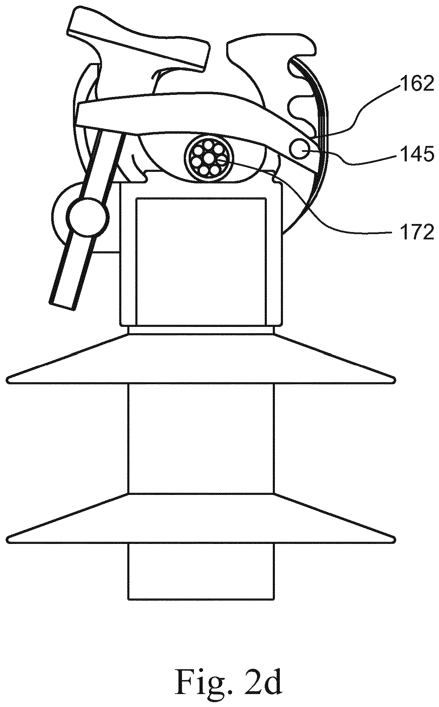

The cable clamp 140 comprises a latch 144 connected to the tightening means 141 at the side defined by the first side wall 121. The latch 144 moves pivotally along the tightening means 141 between a closed position and an open position. Figures 2b, 2c and 2d show different examples of one embodiment in a closed position. The latch 144 is in one embodiment made of plastic or fiberglass or a combination of plastic and fiberglass.

The recess 111 comprises a first groove 151 on the first side wall 121 and a second groove 152 on the second side wall 122, configured to receive the latch 144 over the power line cable, when the power line cable is on the cable support 110. The latch 144 is positioned transversely to the recess 111, clamping the power line cable in the tightened position. The latch 144 extends over the first groove 151 and the second groove 152, wherein it may be fixed or tightened on both sides of the opening 130. The latch 144 comprises an extension 145 extending sideways over the second groove 152 outside the recess 111. The extension 145 keeps one end of the latch 144 from escaping through the groove 151 to the recess 111. In one embodiment the latch 144 comprises two extensions 145 on opposite sides of the latch 144. The extension 145 is in one embodiment shaped as a pin and in one embodiment as a fin configured to withstand a lateral force during the tightened position.

An outer surface of the second side wall 122 comprises a slot 160 for receiving the extension 145 and retaining the latch 144 between the first side wall 121 and the second side wall 122. In one embodiment the outer surface of the second side wall 122 comprises multiple slots for receiving the extension 145, as in the example of Figure 2a a first slot 160, a second slot 161 and a third slot 162. The slots 160, 161, 162 are positioned one on the other, enabling adjusting of the latch 144 position on the second groove 152 during a tightened position. The slots 160, 161, 162 may be pointed downwards, allowing pushing of the latch 144 manually downwards during the tightening. The extension 145 of the latch 144 may click into a lower slot when the installer pushes the latch 144, for example from the first slot 160 to the second slot 161. The insulator may be used with cables having different gauges, for example in Figure 2b with a thick cable 171 the extension 145 is inserted in the second slot 161; and in Figure 2d with a thin cable 172 the extension 145 is inserted in the third slot 162. The number of slots 160, 161, 162 is not limited to three slots; an embodiment may comprise any suitable number of slots that interact with the extensions. In one embodiment a vertical distance is provided between the cable support 110 and the knuckle 103 to enhance the vertical pull of the tightening means exerted to the latch 144, which causes it to tighten in any of the slots 160, 161, 162.

In one embodiment the tightening means 141 and the latch 144 comprise a freely swiveling connection. The latch 144 comprises a hole 149, and the rod 146 extends through the hole 149. In an untightened position the latch 144 may swivel around the rod 146. In one embodiment the tightening means 141 comprises a spherical member 148, for example the winged nut 147 or the winged bolt head 147 comprising the spherical lower portion 148 configured to interact with the hole 149 having a concave wall, causing the latch 144 position to be fixed in an extended position. In the example shown in Figure 2a, the latch 144 is pulled up, wherein the hole 149 and the spherical lower portion 148 interact by preventing the swivel or rotation of the latch 144. In this position the latch 144 may be pulled over the opening 130, enabling it to reach any of the slots 160, 161, 162.

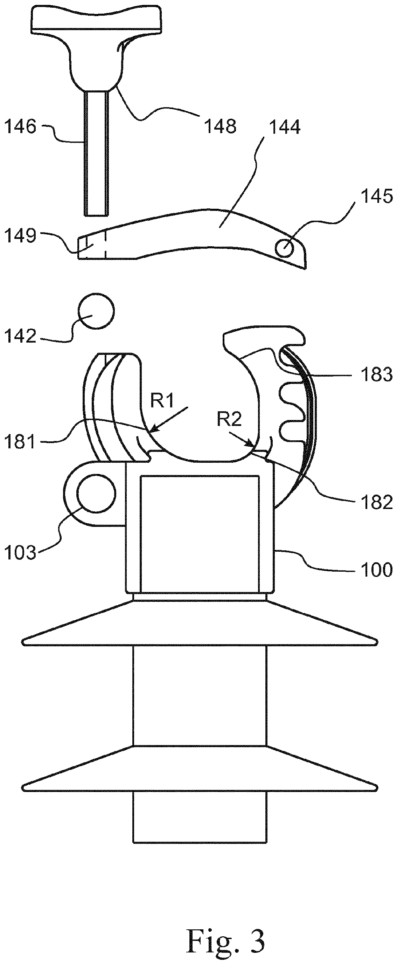

Figure 3 illustrates one embodiment schematically showing parts of the tightening means and the latch separated. In one embodiment the first side wall 121 extends from the first side of the bottom 120 having a first bend 181 along a first radius R1 to a portion perpendicular to the bottom 120, improving retaining of the power line cable in the recess 111 in an untightened position. In one embodiment the second side wall 122 extends from the second side having a second bend 182 according to a second radius R2 and a third bend 183 extending over the bottom 120, improving retaining of the power line cable in the recess 111 in an untightened position. In one embodiment the second radius R2 is smaller than the first radius R1, improving retaining of the power line cable in the recess 111 in an untightened position. The radius R2 does not cause lifting of the power line cable in the case of pulling of the cable sideways against the second side wall 121. In one embodiment the first radius R1 and the second radius R2 are smaller than the radius of the power line cable.

The insulator as disclosed reduces the number of required tools during the assembly. The non-metallic structure reduces the magnetic fields and the interaction with the electric field around the power line cable. The parts are integrated in the insulator, wherein the risk of dropping parts from the high altitude is minimized. The insulator structure improves the assembly step of pulling the slack cable, as the need of components for tightening the cable is reduced. The cable may slide through the insulator until the latch has been tightened into the final position.

An insulator for a power line cable is disclosed, comprising: an insulator body; means for attaching the insulator body to a support structure; a cable support attached to the insulator body; the cable support comprising a recess having a bottom, a first side wall extending from a first side of the bottom and a second side wall extending from a second side of the bottom; the recess having an opening between the first side wall and the second side wall configured to receive a power line cable sideways; and a cable clamp configured to retain the power line cable in the recess, comprising a tightening means for tightening the cable clamp to the power line cable. The insulator comprises the tightening means being pivotally connected to the insulator body; the cable clamp comprising a latch connected to the tightening means at the side defined by the first side wall, the recess having a first groove on the first side wall and a second groove on the second side wall, configured to receive the latch over the power line cable; the latch extending over the first groove and the second groove and comprising an extension extending sideways over the second groove outside the recess; and an outer surface of the second side wall comprising a slot for receiving the extension and retaining the latch between the first side wall and the second side wall.

In one embodiment the insulator comprises the bottom and the first side wall having a convex shape. In one embodiment the insulator comprises the tightening means comprising a bolt. In one embodiment the insulator comprises the tightening means extending through a hole in the latch, allowing the latch to swivel in an untightened position. In one embodiment the insulator comprises the tightening means extending through a hole in the latch and comprising a spherical member configured to interact with the hole having a concave wall, causing the latch position to be fixed in an extended position. According to claim 1, the insulator comprises the first side wall extending from the first side of the bottom having a first bend along a first radius to a portion perpendicular to the bottom. In one embodiment the insulator comprises the second side wall extending from the second side of the bottom having a second bend according to a second radius and a third bend extending over the bottom. In one embodiment the insulator comprises the second radius being smaller than the first radius. In one embodiment the power line cable is a medium voltage cable having a covered conductor. In one embodiment the insulator comprises the outer surface of the second side wall comprising multiple slots for receiving the extension and adjusting the latch position on the second groove during a tightened position. In one embodiment the cable support is formed as an integral piece with the insulator body.

Furthermore, if desired, one or more of the above-described functions may be optional or may be combined. Although various aspects of the invention are set out in the independent claims, other aspects of the invention comprise other combinations of features from the described embodiments and/or the dependent claims with the features of the independent claims, and not solely the combinations explicitly set out in the claims.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. An insulator for a medium voltage power line cable, comprising:
an insulator body (100);
means for attaching (101) the insulator body (100) to a support structure;
a cable support (110) attached to the insulator body (100);
the cable support (110) comprising a recess (111) having a bottom (120), a first side wall (121) extending from a first side of the bottom (120) and a second side wall (122) extending from a second side of the bottom (120);
the recess (111) having an opening (130) between the first side wall (121) and the second side wall (122) configured to receive a power line cable sideways; and
a cable clamp (140) configured to retain the power line cable in the recess (111), comprising a tightening means (141) for tightening the cable clamp (140) to the power line cable; wherein the tightening means (141) are pivotally connected to the insulator body (100) and the cable clamp (140) comprises a latch (144) connected to the tightening means (141) at the side defined by the first side wall (121); **characterized by**:
the first side wall (121) extending from the first side of the bottom (120) having a first bend (181) along a first radius (R1) to a portion perpendicular to the bottom (120) for improving retaining of the power line cable in the recess (111) in an untightened position;
the recess (111) having a first groove (151) on the first side wall (121) and a second groove (152) on the second side wall (122), configured to receive the latch (144) over the power line cable;
the latch (144) extending over the first groove (151) and the second groove (152) and comprising an extension (145) extending sideways over the second groove (152) outside the recess (111);
an outer surface of the second side wall (122) comprising a slot (160) for receiving the extension (145) and retaining the latch (144) between the first side wall (121) and the second side wall (122) ;
the outer surface of the second side wall (122) comprising multiple slots (160, 161, 162) for receiving the extension (145) and adjusting the latch (144) position on the second groove (152) during a tightened position; and
the insulator allowing the power line cable to slide through the insulator until the latch (144) has been tightened into a final position.

2. An insulator according to claim 1, **characterized in that** the bottom (120) and the first side wall (121) have a convex shape.

3. An insulator according to claim 1 or claim 2, **characterized by** the tightening means (141) comprising a bolt.

4. An insulator according to any of the claims 1 to 3, **characterized by** the tightening means (141) extending through a hole (149) in the latch (144), allowing the latch (144) to swivel in an untightened position.

5. An insulator according to any of the claims 1 to 4, **characterized by** the tightening means (141) extending through a hole (149) in the latch (144) and comprising a spherical member configured to interact with the hole (149) having a concave wall, causing the latch (144) position to be fixed in an extended position.

6. An insulator according to any of the claims 1 to 5, **characterized by** the second side wall (122) extending from the second side of the bottom (120) having a second bend according to a second radius (R2) and a third bend extending over the bottom (120).

7. An insulator according to claim 6, **characterized by** the second radius (R2) being smaller than the first radius (R1).

8. An insulator according to any of the claims 1 to 7, **characterized by** the power line cable being a medium voltage cable having a covered conductor.

9. An insulator according to any of the claims 1 to 8, **characterized in that** the cable support (110) is formed as an integral piece with the insulator body (100).

## Patentansprüche

1. Ein Isolator für ein Mittelspannungs-Leistungsleitungskabel, umfassend:
einen Isolator-Körper (100),
Mittel zum Befestigen (101) des Isolator-Körpers (100) an einer Trägerstruktur;
einen Kabelträger (110), der an dem Isolator-Körper (100) befestigt ist;
wobei der Kabelträger (110) eine Aussparung (111) mit einem Boden (120), einer ersten Seitenwand (121), die sich von einer ersten Seite des Bodens (120) aus erstreckt, und einer zweiten Seitenwand (122), die sich von einer zweiten Seite des Bodens (120) aus erstreckt, umfasst;
wobei die Aussparung (111) eine Öffnung (130) zwischen der ersten Seitenwand (121) und der zweiten Seitenwand (122) aufweist, die so konfiguriert ist, dass sie ein Stromleitungskabel seitlich aufnimmt; und
eine Kabelklemme (140), die so konfiguriert ist, dass sie das Stromleitungskabel in der Aussparung (111) hält, umfassend eine Spannvorrichtung (141) zum Spannen der Kabelklemme (140) an das Stromleitungskabel; wobei die Spannvorrichtung (141) schwenkbar mit dem Isolator-Körper (100) verbunden ist und die Kabelklemme (140) eine Verriegelung (144) aufweist, die mit der Spannvorrichtung (141) an der Seite verbunden ist, die durch die erste Seitenwand (121) definiert ist; **gekennzeichnet durch**:
die erste Seitenwand (121), die sich von der ersten Seite des Bodens (120) aus erstreckt, eine erste Biegung (181) entlang eines ersten Radius (R1) zu einem Abschnitt senkrecht zu dem Boden (120) aufweist, um das Halten des Stromleitungskabels in der Aussparung (111) in einer ungespannten Position zu verbessern;
die Aussparung (111), die eine erste Nut (151) an der ersten Seitenwand (121) und eine zweite Nut (152) an der zweiten Seitenwand (122)aufweist, die so konfiguriert ist, dass sie die Verriegelung (144) über das Stromleitungskabel aufnimmt;
die Verriegelung (144), die sich über die erste Nut (151) und die zweite Nut (152) erstreckt und eine Verlängerung (145) umfasst, die sich seitlich über die zweite Nut (152) außerhalb der Aussparung (111) erstreckt;
eine Außenfläche der zweiten Seitenwand (122), umfassend einen Schlitz (160) zur Aufnahme der Verlängerung (145) und zum Halten der Verriegelung (144) zwischen der ersten Seitenwand (121) und der zweiten Seitenwand (122);
die Außenfläche der zweiten Seitenwand (122), umfassend mehrere Schlitze (160, 161, 162) zur Aufnahme der Verlängerung (145) und zum Einstellen der Position der Verriegelung (144) an der zweiten Nut (152) während einer gespannten Position; und
der Isolator, der es dem Stromleitungskabel ermöglicht, durch den Isolator zu gleiten bis die Verriegelung (144) in eine endgültige Position gespannt ist.

2. Ein Isolator nach Anspruch 1, **dadurch gekennzeichnet, dass** der Boden (120) und die erste Seitenwand (121) eine konvexe Form haben.

3. Ein Isolator nach Anspruch 1 oder Anspruch 2, **gekennzeichnet durch** die Spannvorrichtung (141), die eine Schraube umfasst.

4. Ein Isolator nach einem der Ansprüche 1 bis 3, **gekennzeichnet durch** die Spannvorrichtung (141), die sich durch ein Loch (149) in der Verriegelung (144) erstreckt, so die Verriegelung (144) in einer ungespannten Position schwenken kann.

5. Ein Isolator nach einem der Ansprüche 1 bis 4, **gekennzeichnet durch** die Spannvorrichtung (141), die sich durch ein Loch (149) in der Verriegelung (144) erstreckt, und umfassend ein kugelförmiges Element, das mit dem Loch (149) mit einer konkaven Wand interagiert, wodurch die Verriegelungsposition (144) in einer verlängerten Position fixiert wird.

6. Ein Isolator nach einem der Ansprüche 1 bis 5, **gekennzeichnet durch** die zweite Seitenwand (122) die sich von der zweiten Seite des Bodens (120) aus erstreckt, die eine zweite Biegung nach einem zweiten Radius (R2) und eine dritte Biegung, die sich über den Boden (120) aus erstreckt, aufweist.

7. Ein Isolator nach Anspruch 6, **gekennzeichnet durch** den zweiten Radius (R2) der kleiner als der erste Radius (R1) ist.

8. Ein Isolator nach einem der Ansprüche 1 bis 7, **gekennzeichnet durch** das Stromleitungskabel, das ein Mittelspannungskabel mit einem umhüllten Leiter ist.

9. Ein Isolator nach einem der Ansprüche 1 bis 8, **dadurch gekennzeichnet, dass** der Kabelträger (110) als ein integrales Teil mit dem Isolator-Körpers geformt ist (100).

## Revendications

1. Isolateur pour un câble de ligne électrique moyenne tension, comprenant:
un corps isolant (100);
des moyens pour fixer (101) le corps isolant (100) à une structure de support;
un support de câble (110) fixé au corps isolant (100);
le support de câble (110) comprenant un évidement (111) ayant un fond (120), une première paroi latérale (121) s'étendant depuis un premier côté du fond (120) et une seconde paroi latérale (122) s'étendant depuis un second côté du fond (120);
l'évidement (111) ayant une ouverture (130) entre la première paroi latérale (121) et la seconde paroi latérale (122) configurée pour recevoir latéralement un câble de ligne électrique; et
un serre-câble (140) configuré pour retenir le câble de ligne électrique dans l'évidement (111), comprenant un moyen de serrage (141) pour serrer le serre-câble (140) au câble de ligne électrique, dans lequel les moyens de serrage (141) étant connecté de manière pivotante au corps isolant (100) et le serre-câble (140) comprenant un verrou (144) relié aux moyens de serrage (141) du côté défini par la première paroi latérale (121);
**caractérisé en ce que** :
la première paroi latérale (121) s'étendant depuis le premier côté du fond (120) ayant un premier coude (181) le long d'un premier rayon (R1) jusqu'à une partie perpendiculaire au fond (120) pour améliorer la retenue du câble de ligne électrique dans l'évidement (111) dans une position non serrée;
l'évidement (111) ayant une première rainure (151) sur la première paroi latérale (121) et une seconde rainure (152) sur la seconde paroi latérale (122), configurée pour recevoir le verrou (144) sur le câble de ligne électrique ;
le verrou (144) s'étendant sur la première rainure (151) et la seconde rainure (152) et comprenant une extension (145) s'étendant latéralement sur la seconde rainure (152) à l'extérieur de l'évidement (111) ;
une surface extérieure de la seconde paroi latérale (122) comprend une fente (160) pour recevoir l'extension (145) et retenir le verrou (144) entre la première paroi latérale (121) et la seconde paroi latérale (122) ;
la surface extérieure de la seconde paroi latérale (122) comprend plusieurs fentes (160, 161, 162) pour recevoir l'extension (145) et régler la position du verrou (144) sur la deuxième rainure (152) lors une position serrée ; et
l'isolateur permettant au câble de ligne électrique de glisser à travers l'isolateur jusqu'à ce que le verrou (144) ait été serré dans une position finale.

2. Isolateur selon la revendication 1, **caractérisé en ce que** le fond (120) et la première paroi latérale (121) ont une forme convexe.

3. Isolateur selon la revendication 1 ou la revendication 2, **caractérisé en ce que** le moyen de serrage (141) comprend un boulon.

4. Isolateur selon l'une quelconque des revendications 1 à 3, **caractérisé par** le moyen de serrage (141) s'étendant à travers un trou (149) dans le verrou (144), permettant au verrou (144) de pivoter dans une position non serrée.

5. Isolateur selon l'une quelconque des revendications 1 à 4, **caractérisé par** le moyen de serrage (141) s'étendant à travers un trou (149) dans le verrou (144) et comprenant un élément sphérique configuré pour interagir avec le trou (149) ayant une paroi concave, amenant la position du verrou (144) à être fixée dans une position étendue.

6. Isolateur selon l'une quelconque des revendications 1 à 5, **caractérisé par** la deuxième paroi latérale (122) s'étendant depuis le deuxième côté du fond (120) ayant un deuxième coude selon un deuxième rayon (R2) et un troisième coude s'étendant sur le fond (120).

7. Isolateur selon la revendication 6, **caractérisé en ce que** le deuxième rayon (R2) est plus petit que le premier rayon (R1).

8. Isolateur selon l'une quelconque des revendications 1 à 7, **caractérisé en ce que** le câble de ligne électrique est un câble moyenne tension ayant un conducteur recouvert.

9. Isolateur selon l'une quelconque des revendications 1 à 8, **caractérisé en ce que** le support de câble (110) est formé comme une pièce d'un seul tenant avec le corps isolant (100).
